# DEMANDE DE BREVET EUROPEEN

(11) **EP 2 388 738 A1**
(43) Date de publication de la demande: **23.11.2011**
(21) Numéro de dépôt: 10163022.6
(22) Date de dépôt: 17.05.2010
(51) Int. Cl.: G06Q 10/00

(54) **Système de traitement de données relatives à des bâtiments**

(71) Demandeur: Alcatel Lucent, 75007 Paris (FR)
(72) Inventeur: Houllier, Jean-Roch, 91620 Nozay (FR); Soudani, Mounir, 91620 Nozay (FR)
(74) Mandataire: Lebkiri, Alexandre

(57) **Abrégé**

La présente invention concerne un système (100) de traitement de données relatives à des bâtiments (106, 108), ce système (100) étant mis en oeuvre de façon à permettre à un utilisateur (102) d'accéder sur un terminal mobile (104), notamment situé à proximité d'un premier bâtiment (106), à des données relatives à de seconds bâtiments (108) sélectionnés de façon à présenter des propriétés techniques similaires aux propriétés techniques dudit premier bâtiment(1 06), caractérisé en ce qu'il comprend:
- des moyens (122, 124₁, 126₁, 128₁, 124₂, 126₂, 128₂, 124₃, 126₃, 128₃) pour identifier automatiquement, notamment via un réseau (112) de télécommunication tel que le réseau Internet, des données relatives à des localisations géographiques et à des périodes de construction dudit premier bâtiment (106) et desdits seconds bâtiments (108),
- des moyens pour définir une distance géographique maximale (Rmax) entre des bâtiments et une distance temporaire maximale (Tmax) entre des périodes de construction desdits bâtiments,
- des moyens (114, 116, 118, 120, 122) pour sélectionner et afficher automatiquement des données relatives audit premier bâtiment (106) et auxdits seconds bâtiments (108) lorsque ces derniers sont situés à une distance dudit premier bâtiment inférieure à la distance géographique maximale (Rmax) et construits à une période distante de la période de construction du premier bâtiment d'une distance temporaire inférieure à la distance temporaire maximale (Tmax).

## Description

La présente invention concerne un système de traitement de données relatives à des bâtiments.

De nombreux professionnels de différents corps de métiers effectuent des études de bâtiments pour des projets relatifs à, par exemple, la construction de nouveaux bâtiments ou la rénovation de bâtiments déjà existants.

A cet effet, un tel professionnel doit généralement se déplacer sur le terrain, c'est-à-dire à l'emplacement du bâtiment à construire et/ou à rénover, afin de recueillir des informations pertinentes à son projet telles que la nature du terrain ou l'environnement du bâtiment concerné.

Parmi les informations pertinentes, le professionnel souhaite généralement obtenir des informations relatives à des bâtiments techniquement similaires au bâtiment à construire ou à rénover puisque l'étude de l'évolution de ces bâtiments similaires peut permettre de mettre en avant des améliorations à prendre en compte lors de l'édification/rénovation du bâtiment concerné.

De fait, les bâtiments fabriqués selon des procédés identiques présentent généralement des avantages et des défauts similaires qui apparaissent au fil du temps.

Toutefois, comme précédemment indiqué, un professionnel a naturellement besoin de se déplacer sur le terrain pour identifier des paramètres pertinents pour effectuer des recherches de bâtiments similaires. Or, sur le terrain, un professionnel est dépourvu des documents - archives et encyclopédies - qui visent à répertorier des bâtiments en fonctions de leurs caractéristiques techniques.

La présente invention vise à palier cet inconvénient en fournissant un système qui permet à un professionnel du bâtiment d'avoir accès, sur le terrain d'un premier bâtiment, à des informations relatives à des bâtiments présentant des caractéristiques similaires. Elle résulte de la constatation que des bâtiments présentent des caractéristiques techniques d'autant plus similaires qu'ils sont situés à des distances réduites et qu'ils ont été fabriqués à des dates proches.

Par exemple, des bâtiments situés à proximité font généralement appel aux mêmes matériaux de constructions et des bâtiments construits à la même époque font appel aux mêmes connaissances techniques de l'époque.

C'est pourquoi, la présente invention concerne un système de traitement de données relatives à des bâtiments, ce système étant mis en oeuvre de façon à permettre à un utilisateur d'accéder sur un terminal mobile, notamment situé à proximité d'un premier bâtiment, à des données relatives à de seconds bâtiments sélectionnés de façon à présenter des propriétés techniques similaires aux propriétés techniques dudit premier bâtiment, caractérisé en ce qu'il comprend:
- des moyens pour identifier automatiquement, notamment via un réseau de télécommunication tel que le réseau Internet, des données relatives à des localisations géographiques et à des périodes de construction dudit premier bâtiment et desdits seconds bâtiments,
- des moyens pour définir une distance géographique maximale entre des bâtiments et une distance temporaire maximale entre des périodes de construction desdits bâtiments,
- des moyens pour sélectionner et afficher automatiquement des données relatives audit premier bâtiment et auxdits seconds bâtiments lorsque ces derniers sont situés à une distance dudit premier bâtiment inférieure à la distance géographique maximale et construits à une période distante de la période de construction du premier bâtiment d'une distance temporaire inférieure à la distance temporaire maximale.

Grâce à un tel système, un professionnel peut accéder, sur le terrain d'un premier bâtiment, de façon rapide et pertinente, à une liste de second(s) bâtiment(s) susceptible(s) de présenter des propriétés techniques similaires ou identiques au premier bâtiment.

Ainsi, l'homme du métier des bâtiments peut déterminer, sur le terrain, la pertinence de propriétés mises en oeuvre pour identifier des bâtiments similaires et, une fois ces propriétés identifiées, utiliser des informations sur les bâtiments similaires pour améliorer son projet de construction et/ou de rénovation de bâtiment.

Dans une réalisation, le système comprend des moyens pour afficher ledit premier bâtiment et lesdits seconds bâtiments au moyen d'icône situés sur un écran du terminal mobile de telle sorte que la distance entre l'icône du premier bâtiment et chaque icône d'un second bâtiment donné soit représentative de la distance géographique et/ou de la distance temporaire entre ledit premier bâtiment et ledit second bâtiment donné.

Selon une réalisation, le système comprend des moyens pour que les icônes des seconds bâtiments soient associés à l'icône du premier bâtiment au moyen de segments, propres à chaque second bâtiment, dont la forme, la couleur et/ou toute autre propriété est représentative de la distance géographie et/ou de la distance temporaire entre ledit premier bâtiment et chaque second bâtiment.

Dans une réalisation, le système comprend des moyens pour identifier des troisièmes bâtiments, situés à des distances géographiques et/ou temporaires dudit premier bâtiment supérieures aux distances géographiques et/ou temporaires desdits seconds bâtiments vis-à-vis du premier bâtiment, et des moyens pour représenter automatiquement lesdits troisièmes bâtiments par des icônes situés en périphérie des seconds icônes sur l'écran dudit terminal mobile.

Selon une réalisation, le système comprend des moyens pour afficher les icônes des bâtiments par groupes de bâtiments présentant des propriétés propres similaires.

Dans une réalisation, le système comprend des moyens pour que les propriétés prises en compte comprennent au moins une des propriétés suivantes: une période de construction, une technique de construction, un style de construction, une localisation, une fonction du bâtiment, le nom d'un architecte, le nom d'une personne ayant financé la construction.

Selon une réalisation, le système comprend des moyens pour représenter les icônes du premier bâtiment et des seconds bâtiments selon un unique axe représentatif des distances géographique et/ou temporaires entre lesdits premier et seconds bâtiments.

Selon une réalisation, le système comprend des moyens pour basculer entre un affichage selon un axe représentatifs des distances géographiques et un affichage selon un axe représentatif des distances temporaires.

Dans une réalisation, le système comprend des moyens pour identifier manuellement ou automatiquement, au moyen de coordonnées satellitaires du type GPS pour « Global Positionning » en anglais, ledit premier bâtiment.

L'invention concerne également un procédé de traitement de données relatives à des bâtiments, ce procédé étant mis en oeuvre de façon à permettre à un utilisateur d'accéder sur un terminal mobile, notamment situé à proximité d'un premier bâtiment, à des données relatives à de seconds bâtiments sélectionnés de façon à présenter des propriétés techniques similaires aux propriétés techniques dudit premier bâtiment, caractérisé en ce qu'il met en oeuvre un système conforme à l'une des réalisations suivantes effectuant les étapes suivantes:
- l'étape d'identifier automatiquement, notamment via un réseau de télécommunication tel que le réseau Internet, des données relatives à des localisations géographiques et à des périodes de construction dudit premier bâtiment et desdits seconds bâtiments,
- l'étape de définir une distance géographique maximale entre des bâtiments et une distance temporaire maximale entre des périodes de construction desdits bâtiments, et
- l'étape de sélectionner et d'afficher automatiquement des données relatives audit premier bâtiment et auxdits seconds bâtiments lorsque ces derniers sont situés à une distance dudit premier bâtiment inférieure à la distance géographique maximale et construits à une période distante de la période de construction du premier bâtiment d'une distance temporaire inférieure à la distance temporaire maximale.

D'autres caractéristiques et avantages de l'invention apparaîtront à la lumière de la description ci-dessous, effectuée à titre illustrative et non limitatif, en référence aux figures ci-jointes sur lesquelles :
- la figure 1 représente de façon schématique un système conforme à l'invention,
- les figures 2, 3 et 4 représentent des interfaces hommes/machines transmettant des données obtenues par un système conforme à l'invention traitant de distances temporaires et géographiques entre bâtiments, et
- la figure 5 représente une interface homme/machine transmettant les données obtenues par un système conforme à l'invention traitant de différentes distances temporaires.

Les éléments identiques, par structure ou par fonction, apparaissant sur différentes figures conservent, sauf précision contraire, les mêmes références.

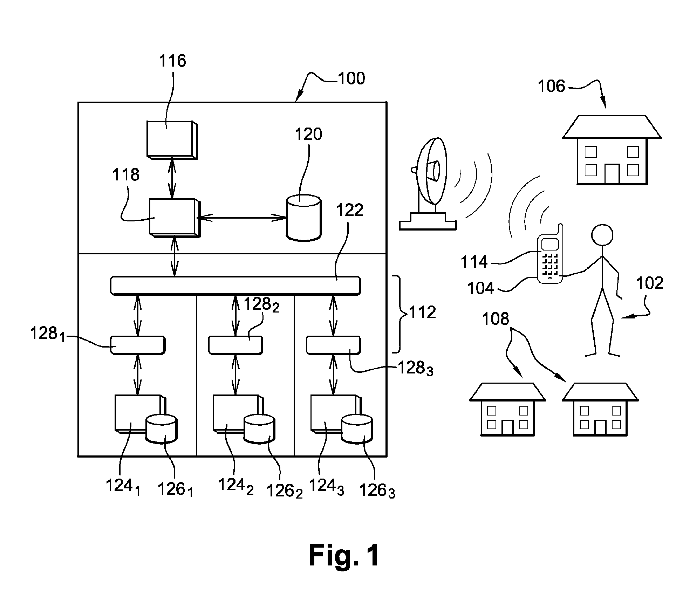

En référence à la figure 1, l'invention concerne un système 100 de traitement de données relatives à des bâtiments, ce système 100 étant mis en oeuvre de façon à permettre à un utilisateur 102 d'accéder sur un terminal mobile 104, notamment situé à proximité d'un premier bâtiment 106, à des données relatives à de seconds bâtiments 108 sélectionnés de façon à présenter des propriétés techniques similaires aux propriétés techniques dudit premier bâtiment 106.

A cet effet, le système 100 comprend des moyens pour identifier automatiquement, notamment via un réseau 112 de télécommunication tel que le réseau Internet, des données relatives à des localisations géographiques et à des périodes de construction du premier bâtiment 106 et des seconds bâtiments 108.

Dans cette réalisation, ces moyens comprennent une interface logicielle 114, ou « gateway » en anglais, permettant à l'utilisateur 102 d'accéder audit réseau 112 via un serveur 116 géré par un opérateur offrant au terminal 104 l'accès au réseau 112.

Afin d'accélérer l'accès aux données du réseau 112, le serveur 116 est associé à une mémoire vive 118, ou « cache » en anglais, ainsi qu'à une base de données 120 où sont stockées de façon respectivement provisoire ou fixe les données obtenues via le réseau 112.

Ces données relatives à des localisations géographiques et à des périodes de construction de bâtiments sont obtenues via des moyens logiciels 122 requérant ces données auprès de serveurs 124₁, 124₂ ou 124₃ du réseau 112.

A cet effet, ces moyens 122 utilisent un protocole de communication, tel que le protocole IP pour « Internet Protocol » en anglais en considérant que le réseau 112 est ledit réseau Internet, permettant de transmettre de telles requêtes d'information et de recevoir, via des interfaces 128₁, 128₂ ou 128₃ conformes audit protocole, des données stockées par chaque serveur 124₁, 124₂ ou 124₃ dans une base de données 126₁, 126₂ ou 126₃ associée.

Par ailleurs, l'utilisateur 102 a défini une distance géographique maximale Rmax entre des bâtiments (par exemple 10, 100, 1000 ou 10.000 km) et une distance temporaire maximale Tmax (par exemple 10, 50, 100, 200 ou 400 ans) entre des périodes de construction de bâtiments de telle sorte que les moyens 122 peuvent sélectionner, parmi les bâtiments identifiés dans les bases 126₁, 126₂ ou 126₃, des seconds bâtiments 108 situés à une distance dudit premier bâtiment inférieure à la distance géographique maximale et construits à une période distante de la période de construction du premier bâtiment 106 d'une distance temporaire inférieure à la distance temporaire maximale.

Ainsi, les seconds bâtiments 108 sélectionnés présentent une proximité, en termes de distance géographique et temporaire, ce qui les rend susceptibles de présenter des propriétés techniques similaires aux propriétés techniques du bâtiment 106.

A ce stade, il convient de noter que, en fonction des variantes, le système 100 comprend des moyens pour identifier manuellement, par exemple à l'aide d'indications de l'utilisateur 102 comme la saisie du nom du bâtiment, ou automatiquement, par exemple au moyen de coordonnées satellitaires du type GPS pour « Global Positionning » en anglais, la localisation du premier bâtiment 106.

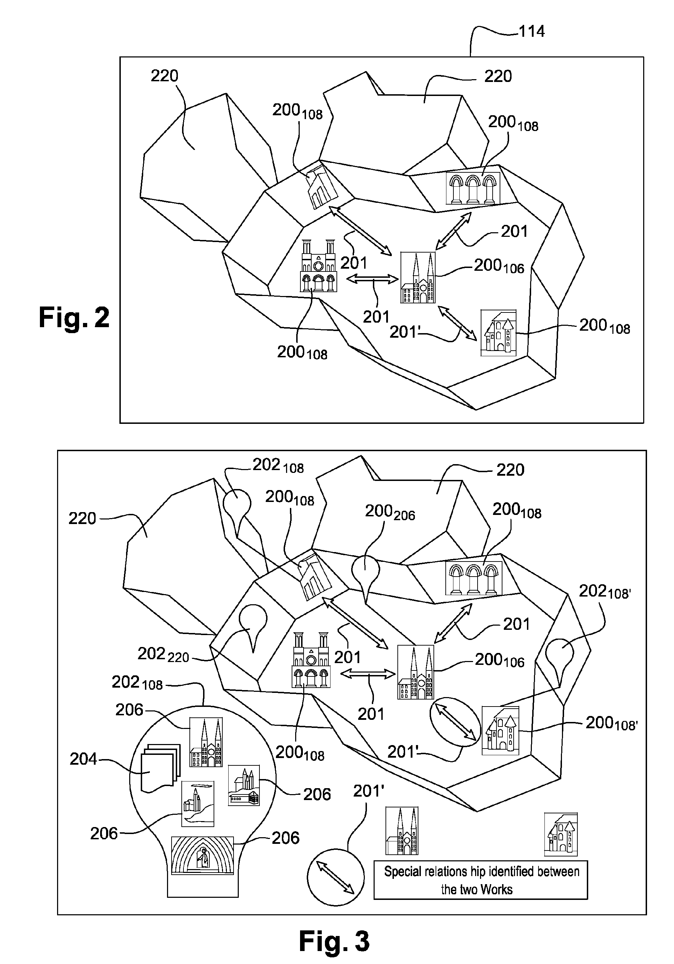

A partir de l'identification du premier bâtiment, et afin de rendre accessible à l'utilisateur 102 le résultat de la sélection, le terminal 104 comprend des moyens pour afficher dans l'interface 114 des icônes (figure 2) dudit premier bâtiment 106 et desdits seconds bâtiments 108 de telle sorte que la distance entre l'icône 200₁₀₆ du premier bâtiment 106 et chaque icône 200₁₀₈ d'un second bâtiment 108 donné soit représentative de la distance géographique et/ou temporaire entre ledit premier bâtiment 106 et chaque second bâtiment 108.

Par ailleurs, dans cette réalisation, chaque icône 200₁₀₈ d'un second bâtiment 108 est associé à l'icône 200₁₀₆ du premier bâtiment 106 au moyen d'un segment 201 spécifique, c'est-à-dire propre à chaque couple formé par le premier bâtiment 106 et ce second bâtiment 108.

Typiquement la forme - dans cet exemple la longueur - et/ou la couleur de chaque segment 201 est ainsi représentative de la distance - géographique et/ou temporaire - entre le premier bâtiment 106 et le second bâtiment 108 associé audit segment 201.

Dans une variante de l'interface 114 représentée à la figure 3, l'icône 200ᵢ d'un bâtiment i peut être associé à un lien 202i interactif fournissant des informations sur le bâtiment i considéré comme un script 204, pour les informations textuelles, ou des photographies et des images 206 complémentaires de l'image utilisé dans l'icône 200i.

Egalement selon une variante, un segment 201' peut être mis en valeur afin de souligner l'existence d'une relation spécifique entre le bâtiment 106 et un bâtiment 108' associé à ce segment 201'.

Les icônes 200₁₀₈ forment un groupe, ou pièce, central autour de l'icône 200₁₀₆ qui se distinguent de pièces 220 situées en périphérie de ce groupe central et donnant accès à des icônes d'autres bâtiments présentant moins de similitudes, en termes de distance géographique et temporaire, avec le premier bâtiment 106.

Dans une variante de l'invention, le système comprend également des moyens pour identifier des troisièmes bâtiments, situés à des distances dudit premier bâtiment 106 supérieures aux distances des seconds bâtiments 108 vis-à-vis du premier bâtiment et/ou construit à des dates distantes de la date de construction dudit premier bâtiment d'une période supérieures aux secondes périodes des seconds bâtiments.

Dans ce cas, ces troisièmes bâtiments peuvent être représentés par des icônes situés en périphérie des seconds icônes sur l'écran dudit terminal mobile - ce qui n'est pas le cas sur les figures jointes pour des raisons de clarté.

Pour des raisons de clarté, dans une réalisation, les icônes sont affichés par groupes de bâtiments présentant des propriétés propres similaires, de telles propriétés pouvant comprendre moins une des propriétés suivantes : une période de construction, une technique de construction, un style de construction, une localisation, une fonction du bâtiment, un nom d'architecte, un nom de personne ayant financé la construction du bâtiment.

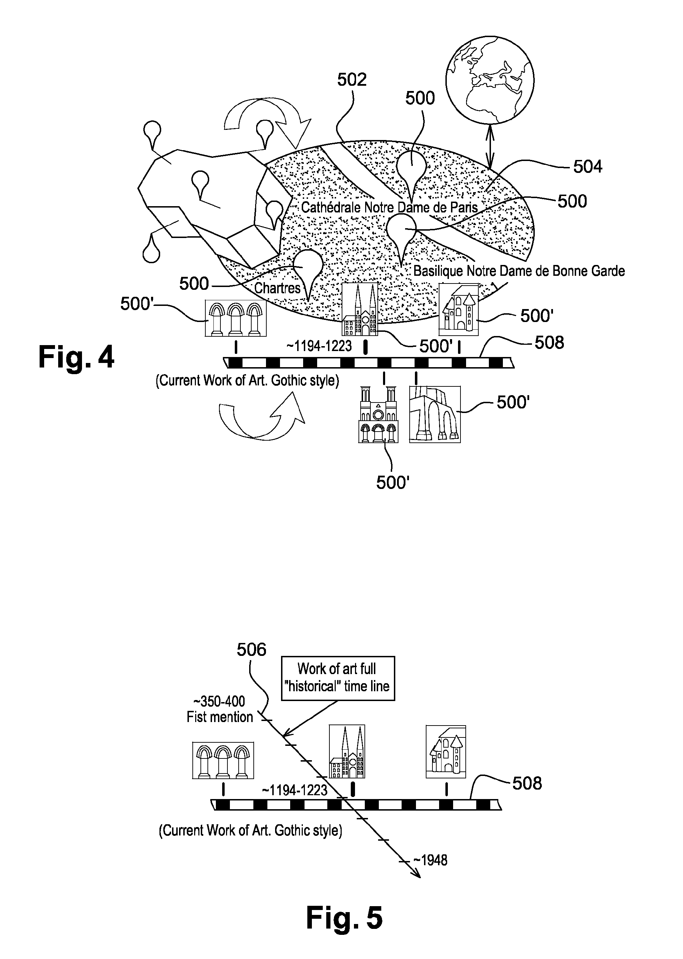

En référence à la figure 4, le système 100, voire plus simplement le terminal 114, peut comprendre des moyens pour représenter des icônes 500 simplifiés du premier bâtiment 106 et des seconds bâtiments 108 selon une représentation 502 exclusivement géographique - par exemple sur une carte 504 - et/ou pour représenter des icônes illustratifs 500' selon une représentation 506 exclusivement temporaire - par exemple selon un axe chronologique 506.

Dans une réalisation, le système 100 comprend des moyens pour afficher simultanément ces deux représentations et/ou des moyens pour représenter uniquement une de ces représentations tout en pouvant basculer de l'une à l'autre.

Par ailleurs, en référence à la figure 5, chacune de ces représentations peuvent faire l'objet de variante. Par exemple, la représentation des icônes 500' selon le premier axe chronologique 506 indiquant la période de construction de chaque bâtiment peut être complété par un second axe chronologique 508 indiquant des informations complémentaires comme des dates des publications relatives à l'un ou plusieurs de ces bâtiments.

La présente invention est susceptible de nombreuses variantes. Par exemple, le système 100 peut être mis en oeuvre pour traiter des données relatives à des éléments techniques autres que des bâtiments pour lesquels il peut être avantageux de faire une recherche pertinente sur la base des critères de temps et d'espace autour d'une localisation donnée.

Selon une autre variante, l'invention peut être mise en oeuvre pour fournir des informations pertinentes dans le cadre de projets culturels, comme une visite d'un bâtiment ayant une fonction de musée.

Dans ce contexte, l'invention permet de consulter sur un terminal la présence éventuelle d'autres bâtiments d'une époque similaire, dans une proximité donnée et, par exemple, avec un style similaire.

Plus généralement, l'invention peut être mise en oeuvre pour obtenir des informations relatives à des oeuvres, telles que des peintures ou des sculptures, selon un procédé analogue au procédé décrit dans ce document pour des bâtiments. Ainsi, un utilisateur visitant un musée peut avoir accès, sur son portable, à un musée virtuel affichant des oeuvres distantes, et des informations relatives à ces dernières, ayant des rapports avec une oeuvre visitée (typiquement des similitudes telles que le style, l'époque, le lieu et/ou l'auteur).

Dans ce cas, les serveurs des musées, des fondations culturelles et d'autres organismes susceptibles de fournir des informations sur les propriétés techniques des oeuvres visités sont mis en oeuvre comme serveur 124₁, 124₂ ou 124₃. Ainsi, le visiteur/observateur d'une oeuvre culturelle peut avoir accès, via son terminal, à de nombreuses informations relatives à des oeuvres pertinente à l'appréciation de l'oeuvre visitée/observée de façon automatique, les résultats étant présentés de façon à fournir des informations techniques (distance, âge, etc) de façon simple et conviviale.

En outre, le visiteur peut ainsi accéder à l'ensemble des informations intrinsèques aux oeuvres (date de construction, style, architecte, etc) et extrinsèques, c'est-à-dire relatives à d'autres oeuvres et au contexte de la réalisation de l'oeuvre considérée, que le système peut identifier sur un réseau comme le réseau Internet.

De fait, les propriétés techniques utilisées pour définir un bâtiment peuvent varier en fonction des applications de l'invention étant entendu qu'elles comprennent au moins une des propriétés suivantes: une période de construction, une technique de construction, un style de construction, une localisation, une fonction du bâtiment, le nom d'un architecte, le nom d'un mécène.

Il convient de noter que le système conforme à l'invention fournit des informations en temps réel et dynamiques, c'est-à-dire pouvant évoluer en fonction des paramètres - propriétés techniques, distances maximales, etc - réglées par son utilisateur, ce qui permet à celui-ci de disposer d'une base de données individualisée à ses intérêts et au bâtiment visité.

Par ailleurs, les représentations de l'interface 114 peuvent être en deux ou trois dimensions (2D ou 3D) ce qui permet à l'utilisateur du système d'avoir une approche intuitive vis-à-vis des résultats groupés, par exemple, selon des critères de période de construction ou de style.

Il est possible qu'un bâtiment soit construit sur la base de différentes propriétés techniques apparemment contradictoires comme des styles différents - romain et gothique.

Dans ce cas, le bâtiment peut être associé à tous ces différentes propriétés techniques ou, plus simplement, à l'une seule d'entre elles, comme par exemple la plus récente (style le plus récent) ou la plus dominante (matériau principal de construction).

## Revendications

1. Système (100) de traitement de données relatives à des bâtiments (106, 108), ce système (100) étant mis en oeuvre de façon à permettre à un utilisateur (102) d'accéder sur un terminal mobile (104), notamment situé à proximité d'un premier bâtiment (106), à des données relatives à de seconds bâtiments (108) sélectionnés de façon à présenter des propriétés techniques similaires aux propriétés techniques dudit premier bâtiment(1 06), **caractérisé en ce qu'**il comprend:
- des moyens (122, 124₁, 126₁, 128₁, 124₂ 126₂, 128₂, 124₃, 126₃, 128₃) pour identifier automatiquement, notamment via un réseau (112) de télécommunication tel que le réseau Internet, des données relatives à des localisations géographiques et à des périodes de construction dudit premier bâtiment (106) et desdits seconds bâtiments (108),
- des moyens pour définir une distance géographique maximale (Rmax) entre des bâtiments et une distance temporaire maximale (Tmax) entre des périodes de construction desdits bâtiments,
- des moyens (114, 116, 118, 120, 122) pour sélectionner et afficher automatiquement des données relatives audit premier bâtiment (106) et auxdits seconds bâtiments (108) lorsque ces derniers sont situés à une distance dudit premier bâtiment inférieure à la distance géographique maximale (Rmax) et construits à une période distante de la période de construction du premier bâtiment d'une distance temporaire inférieure à la distance temporaire maximale (Tmax).

2. Système (100) selon la revendication 1 **caractérisé en ce qu'**il comprend des moyens pour afficher ledit premier bâtiment (106) et lesdits seconds bâtiments (108) au moyen d'icônes (200₁₀₆, 200₁₀₈) situés sur un écran (114) du terminal (104) mobile de telle sorte que la distance entre l'icône du premier bâtiment (200₁₀₆) et chaque icône (200₁₀₈) d'un second bâtiment (108) donné soit représentative de la distance géographique et/ou de la distance temporaire entre ledit premier bâtiment (106) et ledit second bâtiment (108) donné.

3. Système (100) selon la revendication 1 ou 2 **caractérisé en ce qu'**il comprend des moyens pour que les icônes (200₁₀₈) des seconds bâtiments (108) soient associés à l'icône (200₁₀₆) du premier bâtiment (106) au moyen de segments (201), propres à chaque second bâtiment (108), dont la forme, la couleur et/ou une autre propriété est représentative de la distance géographie et/ou de la distance temporaire entre ledit premier bâtiment (106) et chaque second bâtiment (108).

4. Système (100) selon l'une des revendications précédentes **caractérisé en ce qu'**il comprend des moyens pour identifier des troisièmes bâtiments, situés à des distances géographiques et/ou temporaires dudit premier bâtiment supérieures aux distances géographiques et/ou temporaires desdits seconds bâtiments vis-à-vis du premier bâtiment, et des moyens pour représenter automatiquement lesdits troisièmes bâtiments par des icônes (220) situés en périphérie des seconds icônes sur l'écran dudit terminal mobile.

5. Système (100) selon l'une des revendications précédentes **caractérisé en ce qu'**il comprend des moyens pour regrouper les icônes des bâtiments par groupes (220) de bâtiments présentant des propriétés propres similaires.

6. Système (100) selon la revendication 5 **caractérisé en ce qu'**il comprend des moyens pour que les propriétés propres prises en compte comprennent au moins une des propriétés suivantes: une période de construction, une technique de construction, un style de construction, une localisation, une fonction du bâtiment, le nom d'un architecte, le nom d'une personne ayant financé la construction d'un bâtiment.

7. Système (100) selon l'une des revendications précédentes **caractérisé en ce qu'**il comprend des moyens pour représenter les icônes (200₁₀₆, 200₁₀₈) du premier bâtiment (106) et des seconds bâtiments (108) selon un unique axe (506) représentatif des distances géographique et/ou temporaires entre lesdits premier et seconds bâtiments.

8. Système (100) selon la revendication 7 **caractérisé en ce qu'**il comprend des moyens pour basculer entre un affichage selon une carte représentative des distances géographiques et un affichage selon un axe (506) représentatif des distances temporaires de construction.

9. Système (100) selon l'une des revendications précédentes **caractérisé en ce qu'**il comprend des moyens pour identifier manuellement ou automatiquement, au moyen de coordonnées satellitaires du type GPS pour « Global Positionning » en anglais, ledit premier bâtiment.

10. Procédé de traitement de données relatives à des bâtiments (106, 108), ce procédé étant mis en oeuvre de façon à permettre à un utilisateur (102) d'accéder sur un terminal mobile (104), notamment situé à proximité d'un premier bâtiment (106), à des données relatives à de seconds bâtiments (108) sélectionnés de façon à présenter des propriétés techniques similaires aux propriétés techniques dudit premier bâtiment(1 06), **caractérisé en ce qu'**il utilise un système (100) conforme à l'une des revendications précédentes afin de mettre en oeuvre:
- une étape pour identifier automatiquement, notamment via un réseau (112) de télécommunication tel que le réseau Internet, des données relatives à des localisations géographiques et à des périodes de construction dudit premier bâtiment (106) et desdits seconds bâtiments (108),
- une étape pour définir une distance géographique maximale (Rmax) entre des bâtiments et une distance temporaire maximale (Tmax) entre des périodes de construction desdits bâtiments,
- une étape pour sélectionner et afficher automatiquement des données relatives audit premier bâtiment (106) et auxdits seconds bâtiments (108) lorsque ces derniers sont situés à une distance dudit premier bâtiment inférieure à la distance géographique maximale (Rmax) et construits à une période distante de la période de construction du premier bâtiment d'une distance temporaire inférieure à la distance temporaire maximale (Tmax).
